# EUROPÄISCHE PATENTSCHRIFT

(11) **EP 3 221 094 B1**
(45) Veröffentlichungstag und Bekanntmachung des Hinweises auf die Patenterteilung: **16.08.2023**
(21) Anmeldenummer: 15797599.6
(22) Anmeldetag: 18.11.2015
(51) Int. Cl.: B25J 9/16, G05B 19/401

(54) **VERFAHREN UND SYSTEM ZUR KORREKTUR EINER BEARBEITUNGSBAHN EINES ROBOTERGEFÜHRTEN WERKZEUGS**
METHOD AND SYSTEM FOR CORRECTING A PROCESSING PATH OF A ROBOT-GUIDED TOOL
PROCÉDÉ ET SYSTÈME DE CORRECTION D'UNE TRAJECTOIRE D'USINAGE D'UN OUTIL GUIDÉ PAR UN ROBOT

(30) Priorität: 21.11.2014 DE 102014017307
(43) Veröffentlichungstag der Anmeldung: 27.09.2017
(73) Patentinhaber: KUKA Deutschland GmbH, 86165 Augsburg (DE)
(72) Erfinder: KRAUSE, Jochen, 90475 Nürnberg (DE)
(74) Vertreter: Schlotter, Alexander Carolus Paul
(86) Internationale Anmeldenummer: PCT/EP2015/002304
(87) Internationale Veröffentlichungsnummer: WO 2016/078760

(56) Entgegenhaltungen:
- EP-A1- 1 145 804
- EP-A1- 2 325 711
- EP-A2- 0 353 585
- EP-A2- 0 361 663
- DE-A1-102005 047 204
- US-A- 5 570 458
- US-A1- 2004 093 119

## Beschreibung

Die vorliegende Erfindung betrifft ein Verfahren und ein System zum Bearbeiten wenigstens eines Bauteils mit einem robotergeführten Werkzeug sowie ein Computerprogrammprodukt zur Durchführung des Verfahrens.

Aus betriebsinterner Praxis ist es bekannt, Soll-Positionen für mehrere Punkte einer Bearbeitungsbahn vorzugeben, wobei vor einem Abfahren der Bearbeitungsbahn ein Versatz des Bauteils gegenüber einer Referenzlage ermittelt und alle Soll-Positionen mit diesem einheitlichen Versatz transformiert werden.

Die US 2004/093119 A1 betrifft ein Verfahren in einem Industrieroboter zur Erhöhung der Genauigkeit in den Bewegungen des Roboters, bei dem ein vom Roboter geführtes Werkzeug dazu gebracht wird, eine Vielzahl von vom Steuersystem erzeugten Positionen einzunehmen, die jeweils von einem Messsystem bestimmt werden, wobei eine Abweichung zwischen der erzeugten Position und der vom Messsystem bestimmten Position als Korrektur in das Steuersystem zur Einstellung der Bewegung eingeführt wird.

Die EP 0 361 663 A2 betrifft ein Verfahren zum Korrigieren eines programmierten Robotermanipulatorpfades zum Kompensieren der Variabilität des Ortes einer Folge von Werkstücken und umfasst die Schritte des Erfassens und Messens von Wegversätzen zwischen dem idealisierten Werkstückort und dem tatsächlichen Ort des Werkstücks an mehreren Wegpunkten, Konvertieren der gemessenen Versätze in Verschiebungen und Rotationen des Werkstücks durch Multiplizieren einer Matrix, die aus den Versatzmessungen besteht, mit einer zuvor vorbereiteten Konvertierungsmatrix, Korrigieren der Wegpunktkoordinaten innerhalb des vorprogrammierten Pfades durch Anwenden der Übersetzungen und Rotationen auf solche Koordinaten, Transformieren der korrigierten vorprogrammierten Pfadkoordinaten in Maschinensteuerungskoordinaten und Bereitstellen einer Steuerung für den Robotermanipulator mit solchen Maschinensteuerungskoordinaten.

Die DE 10 2005 047 204 A1 betrifft ein Verfahren zur Programmierung eines Industrieroboters, wobei der Industrieroboter ein Kontrollsystem mit einem Speicher für ein Programm zur Steuerung des Industrieroboters umfasst, wobei ein externer Rechner zur Änderung des Programms zumindest zeitweise mit dem Kontrollsystemverbunden ist, wobei ein selektierter Teil des Programms auf den externen Rechner zum Bearbeiten übertragen und Änderungen in denSpeicher zurück geschrieben werden, und wobei der Industrieroboter einen bahn basierten Prozess unter Verwendung eines Roboterarmes mit einer Funktionseinrichtung realisiert, wobei als selektierter Teil des Programms die Koordination von Bahnpunkten der Funktionseinrichtung vorgesehen sind, welche am externen Rechner direkt manipuliert sind.

Nach der EP 1 145 804 A1 wird, wenn während des kontinuierlichen Betriebs eines Robotersystems eine Positionsabweichung des Lehrpunkts eines Robotermanipulators erfasst wird, eine Einrichtung zum Korrigieren des Lehrpunkts ohne Anhalten des kontinuierlichen Betriebs des Robotersystems bereitgestellt, wodurch eine Einrichtung zum effizienten Betreiben des Robotersystems ohne Auswirkungen auf die Produktivität der Produktionslinie bereitgestellt wird, wobei mit einer Umschalteinheit zum Umschalten von Modi durch Auswählen aus einem Eingabemodus zum Eingeben von Lehrpunkten, einem Betriebsmodus zum Arbeiten gemäß den Lehrpunkten und einem Im-Prozess-Korrekturmodus zum Korrigieren der in der Speichereinheit gespeicherten Lehrpunkte gemäß dem Daten von der Eingabeeinheit während des Betriebs des Robotermanipulators, der Modus durch die Umschalteinheit in den Im-Prozess-Korrekturmodus umgeschaltet wird, die Daten zum Korrigieren des Lehrpunkts von der Eingabeeinheit eingegeben werden und die Steuereinheit entsprechend der eingegebenen Daten korrigiert und arbeitet.

Die US 5,570,458 A betrifft ein Verfahren zum Steuern der Stellung und Bewegung eines Manipulators, der einen Effektor hält, wobei ein auf einem Werkstück gezeichneter Ist-Arbeitsweg von einem Sensor erfasst wird, vorbestimmte eingelernte Pfaddaten gemäß dem erfassten Arbeitspfad geändert werden und der von dem Manipulator gehaltene Effektor gezogen wird, um den Arbeitspfad auf dem Werkstück genau zu verfolgen.

Aufgabe der vorliegenden Erfindung ist es, das Bearbeiten wenigstens eines Bauteils mit einem robotergeführten Werkzeug zu verbessern.

Diese Aufgabe wird durch ein Verfahren mit den Merkmalen des Anspruchs 1 gelöst. Ansprüche 7, 8 stellen ein System bzw. Computerprogrammprodukt zur Durchführung eines hier beschriebenen Verfahrens unter Schutz. Die Unteransprüche betreffen vorteilhafte Weiterbildungen.

Nach einem Aspekt der vorliegenden Erfindung umfasst ein Verfahren zum Bearbeiten wenigstens eines Bauteils mit einem robotergeführten Werkzeug die Schritte:
a) Vorgeben je einer Soll-Position für mehrere Punkte einer Bearbeitungsbahn;
b) Auswählen von zu korrigierenden Punkten aus den vorgegebenen Punkten;
c) Ermitteln je einer Ist-Position für die ausgewählten Punkte an wenigstens einem zu bearbeitenden Bauteil; und
d) Abfahren der Bearbeitungsbahn auf Basis der bzw. in Abhängigkeit von den ermittelten Ist-Positionen.

Hierdurch können in einer Ausführung gezielt Punkte der Bearbeitungsbahn individuell korrigiert werden. Dadurch können in einer Ausführung vorteilhafterweise insbesondere auch lokale Deformationen von Bauteilen individuell berücksichtigt werden.

Entsprechend ist nach einem Aspekt der vorliegenden Erfindung ein System mit einem robotergeführten Werkzeug zum Bearbeiten wenigstens eines Bauteils, insbesondere hard- und/oder softwaretechnisch, zur Durchführung eines hier beschriebenen Verfahrens eingerichtet. In einer Ausführung weist es ein Mittel zum Vorgeben je einer Soll-Position für mehrere Punkte einer Bearbeitungsbahn, ein Mittel zum Auswählen von zu korrigierenden Punkten aus den vorgegebenen Punkten, ein Mittel zum Ermitteln je einer Ist-Position für die ausgewählten Punkte an wenigstens einem zu bearbeitenden Bauteil, und ein Mittel zum Abfahren der Bearbeitungsbahn auf Basis der ermittelten Ist-Positionen auf.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere wenigstens ein Bauteil mit einem robotergeführten Werkzeug bearbeiten bzw. einen Roboter zum Bearbeiten wenigstens eines Bauteils mit einem robotergeführten Werkzeug steuern kann. Unter einem Roboter im Sinne der vorliegenden Erfindung wird insbesondere ein universell einsetzbarer oder spezialisierter Bewegungsautomat mit mehreren, insbesondere wenigstens drei, Achsen, dessen Bewegungen insbesondere hinsichtlich Bewegungsfolge und/oder Wegen und/oder Winkeln, insbesondere frei, insbesondere ohne mechanischen, insbesondere menschlichen Eingriff, programmierbar und gegebenenfalls sensorgeführt sind, bzw. ein programmierbares spezialisiertes oder Mehrzweck-Handhabungsgerät für das Bewegen von Material, Werkstücken, Werkzeugen oder Spezialgeräten verstanden.

Die Bearbeitungsbahn ist in einer Ausführung eine Schweißbahn, das Werkzeug entsprechend ein robotergeführter Schweißkopf oder Bauteilhalter zum Vorbeiführen des Bauteils an einem, insbesondere umgebungsfesten, Schweißkopf. In einer anderen Ausführung ist die Bearbeitungsbahn eine Lackierbahn, das Werkzeug entsprechend ein robotergeführter Lackierkopf oder Bauteilhalter zum Vorbeiführen des Bauteils an einem, insbesondere umgebungsfesten, Lackierkopf. Alternativ kann die Bearbeitungsbahn auch in einer Applikation wie beispielsweise Kleben, Beschichten, Auftrag von Mitteln, Stoffen oder ähnlichem auf Bauteile und Fügeverfahren auftreten. Als Fügeverfahren werden insbesondere alle Verfahren verstanden, bei denen zumindest zwei Bauteile lösbar oder unlösbar miteinander verbunden werden, beispielsweise durch Klemmen, Schrauben, Schweißen, Löten, Umformen, Crimpen, Preßpassen, Nieten, Kleben oder ähnlichem.

Gleichermaßen kann das Bearbeiten auch ein materialabtragendes Bearbeiten, insbesondere Schneiden, Schleifen, Fräsen, Bohren oder dergleichen sein, das robotergeführte Werkzeug entsprechend ein robotergeführter Schneid-, Schleif-, Fräs- oder Bohrkopf oder dergleichen.

In einer Ausführung werden eine oder mehrere der Soll-Positionen durch Anfahren der Punkte, insbesondere an einem Referenz-Bauteil, und Abspeichern dabei vorliegender Positionen vorgegeben.

In einer Ausführung werden bzw. sind ein oder mehrere der, insbesondere die, zu korrigierenden Punkte, insbesondere (bereits) vor der Bauteilbearbeitung, in einem Bearbeitungsprogramm ausgewählt, insbesondere durch Auswahl aus einer Liste oder Aufnehmen in eine Liste, Markieren oder dergleichen. In einer Weiterbildung sind in dem Bearbeitungsprogramm, insbesondere einem Messprogramm (innerhalb) des Bearbeitungsprogramms, Anweisungen zum Ermitteln der Ist-Positionen von vorgegebenen Punkten der Bearbeitungsbahn vorgesehen bzw. eingebbar bzw. werden eingegeben, wobei diese Punkte dadurch im Sinne der vorliegenden Erfindung ausgewählt werden bzw. sind. Hierdurch kann der Anwender einfach und gezielt zu korrigierende Punkte individuell auswählen.

Erfindungsgemäß sind defaultmäßig einige der vorgegebenen Punkte gemäß einer vorgegebenen, insbesondere parametrierbaren, Vorschrift vorausgewählt, und zwar erfindungsgemäß jeder zweite, dritte oder n-te Punkt. Hierdurch kann standardmäßig ein Kompromiss zwischen einer raschen Bearbeitung mit geringem Messaufwand und einer möglichst exakten Anpassung der Bearbeitungsbahn an das jeweilige Bauteil voreingestellt sein.

Entsprechend weist in einer Ausführung das Mittel zum Auswählen von zu korrigierenden Punkten aus den vorgegebenen Punkten eine Eingabemöglichkeit zum Eingeben von zu korrigierenden Punkten auf.

In einer Ausführung umfassen eine oder mehrere der Ist- und/oder der Soll-Positionen eine ein-, zwei- oder dreidimensionale Lage bzw. einen ein-, zwei- bzw. dreidimensionalen Abstand zu einem, insbesondere umgebungs- und/oder roboterfesten, Referenzpunkt.

Zusätzlich oder alternativ umfassen in einer Ausführung eine oder mehrere der Ist- und/oder der Soll-Positionen eine ein-, zwei- oder dreidimensionale Richtung bzw. eine ein-, zwei- bzw. dreidimensionale Orientierung relativ zu einer, insbesondere umgebungs- und/oder roboterfesten, Referenz, insbesondere Referenzrichtung bzw. Referenzkoordinatensystem.

In einer Weiterbildung umfassen eine oder mehrere der Ist-Positionen Oberflächennormalen und/oder definierte, insbesondere senkrechte oder vorgebbare, Richtungen relativ zu einer Kontur, insbesondere einer oder mehreren, insbesondere einander gegenüberliegenden, Kanten, des Bauteils. Zusätzlich oder alternativ umfassen in einer Weiterbildung eine oder mehrere der Soll-Positionen Werkzeugrichtungen bzw. -orientierungen, insbesondere eine Stoßrichtung, optische Achse oder dergleichen.

Indem für eine Bearbeitungsbahn Soll-Positionen vorgegeben werden, die jeweils eine Werkzeugrichtung bzw. -orientierung umfassen, Ist-Positionen der Punkte an dem zu bearbeitenden Bauteil ermittelt werden, die jeweils eine Oberflächennormale und/oder vorgegebene Richtungen relativ zu einer Kontur umfassen, und die Bearbeitungsbahn auf Basis dieser ermittelten Ist-Positionen abgefahren wird, kann auch eine Richtung bzw. Orientierung des Werkzeugs relativ zu dem Bauteil individuell angepasst werden.

In einer Ausführung sind die Koordinaten der zu ermittelnden Ist-Positionen auswählbar bzw. werden die Koordinaten der zu ermittelnden Ist-Positionen ausgewählt. Entsprechend weist in einer Ausführung das Mittel zum Auswählen von zu korrigierenden Punkten aus den vorgegebenen Punkten eine Eingabemöglichkeit zum Eingeben einer Auswahl von Koordinaten der zu ermittelnden Ist-Positionen auf.

So kann in einer Weiterbildung der Anwender auswählen, ob eine oder mehrere Lage- und/oder eine oder mehrere Richtungs- bzw. Orientierungskoordinaten der jeweiligen Ist-Position ermittelt bzw. die Bearbeitungsbahn auf Basis dieser ermittelten Koordinaten abgefahren, insbesondere diese Koordinaten der Soll-Positionen durch diese, gegebenenfalls transformierten, Koordinaten der Ist-Positionen ersetzt werden (sollen). Beispielsweise kann in einer Ausführung der Anwender auswählen, ob eine ermittelte Ist-Position nur (eine oder mehrere) Lagekoordinaten, nur (eine oder mehrere) Orientierungskoordinaten oder sowohl Lage- als auch Orientierungskoordinaten aufweist. Entsprechend weist in einer Ausführung eine Ist-Position wahlweise unterschiedliche Koordinaten auf.

In einer Ausführung werden die Soll-Positionen für einen oder mehrere der ausgewählten Punkte auf Basis der ermittelten Ist-Positionen für diese Punkte ersetzt und die Bearbeitungsbahn auf Basis dieser Soll-Position abgefahren. Dabei werden in einer Weiterbildung vorgegebene Soll-Lagen durch ermittelte Ist-Lagen ersetzt, insbesondere in einem Speicher überschrieben. Zusätzlich oder alternativ werden in einer Weiterbildung Soll-Richtungen durch korrigierte Richtungen ersetzt, insbesondere in einem Speicher überschrieben, die auf Basis der ermittelten Ist-Richtungen, insbesondere durch Transformation, ermittelt werden. Soll beispielsweise eine Werkzeugrichtung mit einer Oberflächennormale einen vorgegebenen Winkel einschließen, und wird eine Ist-Oberflächennormale für die ausgewählten Punkte ermittelt, kann durch Transformation dieser Ist-Oberflächennormale jeweils eine korrigierte Werkzeugrichtung ermittelt werden, die die ursprüngliche Soll-Werkzeugrichtung ersetzt.

Durch ein Ersetzen von vorgegebenen Soll-Werten auf Basis der ermittelten Ist-Werte, insbesondere durch die ermittelten, gegebenenfalls transformierten, Ist-Werte, kann in einer Ausführung vorteilhaft eine aufwändige zusätzliche Transformation, insbesondere während der Bearbeitung, vermieden werden.

In einer Ausführung werden eine oder mehrere der Ist-Positionen mittels, insbesondere lasergestützter, Triangulation ermittelt. Alternativ oder zusätzlich können auch weitere Messmethoden zur Ermittlung der Ist-Positionen verwendet werden, wie beispielsweise Messungen mit einem Laserpunktsensor oder mit einem taktilen Sensor, insbesondere einem Messtaster, einem Schweißdraht, einer Gasdüsensucheinrichtung oder ähnlichem. Hierdurch kann eine Position, insbesondere Lage und/oder Orientierung, in besonders vorteilhafter, insbesondere exakter und/oder berührungsfreier, Weise ermittelt werden.

Entsprechend weist in einer Ausführung das Mittel zum Ermitteln je einer Ist-Position für die ausgewählten Punkte an dem zu bearbeitenden Bauteil einen, insbesondere robotergeführten, Sensor, insbesondere Lasersensor, zum Erfassen von Punkten an dem zu bearbeitenden Bauteil mittels Triangulation auf.

In einer Ausführung werden eine oder mehrere der Ist-Positionen teilweise oder vollständig automatisiert ermittelt, insbesondere mittels eines Roboters, insbesondere mittels des (bereits oder anschließend) werkzeugführenden Roboters selber, insbesondere durch Anfahren des bzw. der Ist-Positionen mit einem bzw. dem robotergeführten, insbesondere optischen oder taktilen, Sensor, Werkzeug oder dergleichen.

Entsprechend ist in einer Ausführung das Mittel zum Ermitteln je einer Ist-Position für die ausgewählten Punkte ein Mittel zum teilweise oder vollständig automatisierten Ermitteln je einer Ist-Position für die ausgewählten Punkte, insbesondere mittels eines Roboters, insbesondere mittels des (bereits oder anschließend) werkzeugführenden Roboters selber, insbesondere durch Anfahren des bzw. der Ist-Positionen mit einem robotergeführten, insbesondere optischen oder taktilen, Sensor, Werkzeug oder dergleichen.

Hierdurch kann in einer Ausführung die Bearbeitung, insbesondere von mehreren Bauteilen, verbessert werden.

In einer Ausführung werden mehrere, insbesondere typgleiche bzw. gleichartige, Bauteile, insbesondere nacheinander und/oder vollständig oder teilweise automatisiert, mit dem robotergeführten Werkzeug bearbeitet, wobei für diese Bauteile jeweils je eine Ist-Position für ausgewählte (zu korrigierende) Punkte, insbesondere die(selben) ausgewählten Punkte, an dem jeweiligen zu bearbeitenden Bauteil, insbesondere teilweise oder vollständig automatisiert, insbesondere mittels eines bzw. des Roboters, ermittelt und anschließend die Bearbeitungsbahn jeweils auf Basis dieser solcherart bauteilspezifisch( ermittelten Ist-Positionen zur Bearbeitung dieses Bauteils abgefahren wird. In einer Weiterbildung werden bzw. sind für die mehreren Bauteile dieselben Soll-Positionen vorgegeben.

Entsprechend ist in einer Ausführung das Mittel zum Ermitteln je einer Ist-Position für die ausgewählten Punkte ein Mittel zum, insbesondere teilweise oder vollständig automatisierten, Ermitteln, insbesondere mittels eines bzw. des Roboters, je einer bauteilspezifischen Ist-Position für ausgewählte (zu korrigierende) Punkte, insbesondere die(selben) ausgewählten Punkte, an mehreren, insbesondere typgleichen bzw. gleichartigen und/oder nacheinander, mit dem robotergeführten Werkzeug zu bearbeiteten Bauteilen, und das Mittel zum Abfahren der Bearbeitungsbahn auf Basis der ermittelten Ist-Positionen ein Mittel zum Abfahren der Bearbeitungsbahn jeweils auf Basis der bauteilspezifisch( ermittelten Ist-Positionen zur Bearbeitung des jeweiligen Bauteils, um mehrere, insbesondere typgleiche bzw. gleichartige, Bauteile, insbesondere nacheinander und/oder vollständig oder teilweise automatisiert, mit dem robotergeführten Werkzeug zu bearbeiten.

Insbesondere werden somit in einer Ausführung die Schritte c) und/oder d) für mehrere Bauteile wiederholt.

Hierdurch kann in einer Ausführung die Bearbeitung, insbesondere von mehreren Bauteilen, verbessert werden.

In einer Ausführung werden ein oder mehrere Schritte des Verfahrens teilweise oder vollständig bzw. ohne Bedienereingriff ausgeführt bzw. führt das entsprechende Mittel diese teilweise oder vollständig bzw. ohne Bedienereingriff aus.

Weitere Vorteile und Merkmale ergeben sich aus den Unteransprüchen und den Ausführungsbeispielen. Hierzu zeigt, teilweise schematisiert,:
- Fig. 1:: ein System beim Bearbeiten wenigstens eines Bauteils nach einer Ausführung der vorliegenden Erfindung;
- Fig. 2:: einen Schnitt längs der Linie II-II in Fig. 1; und
- Fig. 3:: den Ablauf des Verfahrens.

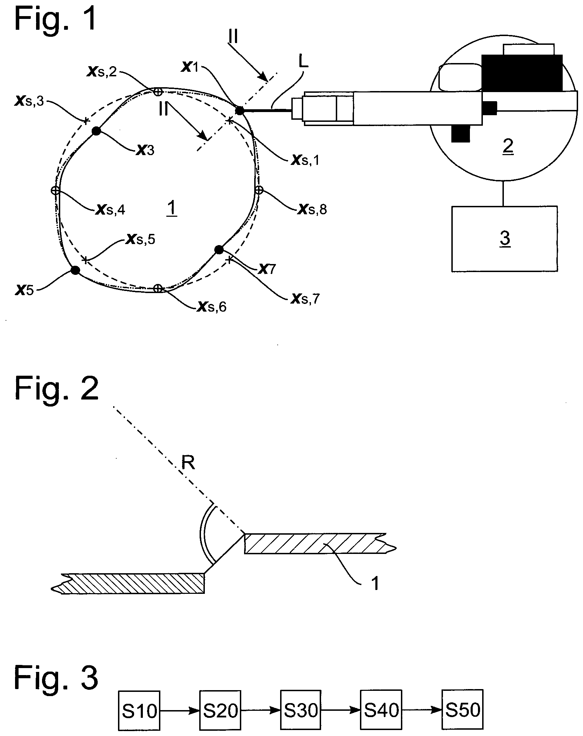

Fig. 1 zeigt ein System beim Bearbeiten wenigstens eines Bauteils 1 nach einer Ausführung der vorliegenden Erfindung.

Das System weist einen Roboter 2 und eine Robotersteuerung 3 auf, die ein in ihr gespeichertes Bearbeitungsprogramm abarbeitet. Es versteht sich, dass das nachfolgend beschriebene Verfahren auch durch spezialisierte, automatisierte Maschinen ausgeführt werden kann, beispielsweise durch spezielle in der Schweißtechnik verwendete "Schweißmaschinen". Daher sollen auch diese Maschinen unter den Begriff Roboter im Sinne dieser Erfindung fallen.

Im Ausführungsbeispiel wird eine Stirnseite des Bauteils 1 in einer entsprechenden Bohrung verschweißt. Hierzu fährt der Roboter 2 mit einem Laserstrahl L eine Bearbeitungsbahn ab.

Dazu werden in einem ersten Schritt S10 (vgl. Fig. 3) Soll-Positionen für mehrere Stützpunkte ***x***_{s,1} bis ***x***_{s,8} der Bearbeitungsbahn vorgegeben, die in Fig. 1 durch Kreuze angedeutet sind. Hierzu werden die Punkte an einem in Fig. 1 gestrichelt angedeuteten Referenz-Bauteil angefahren, und dabei vorliegende Positionen abgespeichert.

Die Positionen umfassen jeweils eine dreidimensionale Lage sowie eine dreidimensionale Werkzeugrichtung bzw. Richtung der optischen Achse des Laserkopfs des Roboters 2.

Dann werden in einem zweiten Schritt S20 zu korrigierende Punkte aus diesen vorgegebenen Punkten ausgewählt. Im Ausführungsbeispiel sind dies exemplarisch die Stützpunkte ***x***_{s,1}, ***x***_{s,3}, ***x***_{s,5} und ***x***_{s,7}. Diese Auswahl geschieht dadurch, dass für diese Stützpunkte jeweils eine Anweisung zum Ermitteln einer Ist-Position für diese Punkte im Bearbeitungsprogramm vorgesehen wird.

Nun wird durch das Bearbeitungsprogramm durch einen robotergeführten Lasersensor (nicht dargestellt) oder andere vorher beschriebene Sensoren in einem dritten Schritt S30 für diese ausgewählten Punkte an dem aktuell zu bearbeitenden Bauteil, das in Fig. 1 ausgezogen dargestellt ist, automatisiert jeweils einebauteilspezifische Ist-Position der Punkte ***x***₁, ***x***₃, ***x***₅ bzw. ***x***₇ ermittelt und automatisiert in das Bearbeitungsprogramm übernommen, wie in Fig. 1 durch ausgefüllte Kreise angedeutet.

Dabei werden zum einen die dreidimensionalen Ist-Lagen dieser Punkte ermittelt. Zum anderen wird jeweils eine Richtung R senkrecht bzw. normal zu einander gegenüberliegenden Kanten des Bauteils 1 ermittelt, wie im Schnitt der Fig. 2 angedeutet. In einer Abwandlung kann der Anwender im Bearbeitungsprogramm vorgeben bzw. vorgegeben haben, welche Koordinaten der Ist-Position ermittelt werden bzw. welche Koordinaten die Ist-Position umfasst, beispielsweise nur die Lagekoordinaten.

Dann werden in einem vierten Schritt S40 in dem in der Robotersteuerung 3 abgespeicherten Bearbeitungsprogramm automatisiert die Soll-Lagen der Stützpunkte ***x***_{s,1}, ***x***_{s,3}, ***x***_{s,5} und ***x***_{s,7} durch die ermittelten Ist-Lagen der Punkte ***x***₁, ***x***₃, ***x***₅ bzw. ***x***₇ ersetzt. Zudem werden auch die Werkzeugorientierungen, insbesondere die optischen Achsen des Laserkopfes, die für diese Stützpunkte ***x***_{s,1}, ***x***_{s,3}, ***x***_{s,5} und ***x***_{s,7} in dem Programm vorgegeben sind, durch korrigierte Richtungen ersetzt, die sich mit einer vorgegebenen Transformation aus den ermittelten Ist-Richtungen R ergeben. Im Ausführungsbeispiel soll exemplarisch die optische Achse des Laserkopfes senkrecht auf der Schweißnaht stehen. Daher wird als Transformation exemplarisch eine identische Abbildung gewählt bzw. die vorgegebene Soll-Werkzeugorientierung in den Punkten ***x***₁, ***x***₃, ***x***₅ bzw. ***x***₇ durch die ermittelte Richtung R senkrecht zu Kanten des Bauteils 1 ersetzt.

Nun wird in einem fünften Schritt S50 automatisiert die durch die Stützpunkte ***x***_{s,1} bis ***x***_{s,8} vorgegebene Bearbeitungsbahn, die in Fig. 1 strich-doppelpunktiert angedeutet ist, mit dem Laserstrahl L robotergeführt abgefahren und insbesondere die Bearbeitung des Bauteils mittels des Laserstrahls durchgeführt, indem die Robotersteuerung 3 den Roboter 2 entsprechend steuert.

Wie durch den Vergleich der strich-doppelpunktiert angedeuteten Bearbeitungsbahn mit der ausgezogen angedeuteten Kontur des Bauteils 1 und der gestrichelt angedeuteten Kontur des Referenz-Bauteils erkennbar, kann so die Bearbeitungsbahn gut an die tatsächliche Kontur des aktuell zu bearbeitenden Bauteils angepasst werden. Auf der anderen Seite müssen durch die Auswahl von Stützpunkten, deren Ist-Position ermittelt wird, nicht zwingend alle Stützpunkte der Bearbeitungsbahn ermittelt werden, was den Messaufwand reduzieren kann. Stattdessen können in Schritt S20 individuell Punkte aus den vorgegebenen Punkten der Bearbeitungsbahn ausgewählt werden.

Die Robotersteuerung 3 bildet zusammen mit dem robotergeführten Lasersensor Mittel zum Vorgeben je einer Soll-Position für mehrere Punkte einer Bearbeitungsbahn, Mittel zum Auswählen von zu korrigierenden Punkten aus den vorgegebenen Punkten, Mittel zum Ermitteln je einer Ist-Position für die ausgewählten Punkte an dem zu bearbeitenden Bauteil, und Mittel zum Abfahren der Bearbeitungsbahn auf Basis der ermittelten Ist-Positionen.

Entsprechend weist die Robotersteuerung 3 eine Eingabemöglichkeit zum Eingeben von zu korrigierenden Punkten auf.

Werden nacheinander mehrere baugleiche Bauteile 1 bearbeitet, werden für jedes Bauteil die Schritte S30 - S50 automatisiert (bauteilspezfisch) wiederholt. Die Schritte S10, S20 werden hingegen für die Bauteile nur einmalig vorab durchgeführt.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 1: Bauteil
- 2: Roboter
- 3: Robotersteuerung
- L: Laserstrahl
- R: Richtung
- ***x***_{s,i}: vorgegebener Punkt
- ***x***ᵢ: Punkt an Bauteil

## Patentansprüche

1. Verfahren zum Bearbeiten wenigstens eines Bauteils (1) mit einem robotergeführten (2) Werkzeug, mit den Schritten:
Vorgeben (S10) je einer Soll-Position für mehrere Punkte (***x***_{s,1}-***x***_{s,8}) einer Bearbeitungsbahn;
Auswählen (S20) von zu korrigierenden Punkten (***x***_{s,1}, ***x***_{s,3}, ***x***_{s,5}, ***x***_{s,7}) aus den vorgegebenen Punkten (***x***_{s,1}-***x***_{s,8}),
wobei zu korrigierende Punkte in einem Bearbeitungsprogramm durch Auswahl aus einer Liste oder Aufnehmen in eine Liste oder Markieren oder eingebbare Anweisungen zum Ermitteln von Ist-Positionen von vorgegebenen Punkten der Bearbeitungsbahn oder mithilfe einer Eingabemöglichkeit zum Eingeben von zu korrigierenden Punkten ausgewählt werden und wobei defaultmäßig jeder zweite, dritte oder n-te Punkt der vorgegebenen Punkte vorausgewählt ist;
sensorgestütztes Ermitteln (S30) an dem zu bearbeitenden Bauteil (1) jeweils einer bauteilspezifischen Ist-Position für die ausgewählten Punkte (***x***₁, ***x***₃, ***x***₅, ***x***₇);
Ersetzen (S40) der Soll-Position für wenigstens einen der ausgewählten Punkte auf Basis der ermittelten Ist-Position für diesen Punkt;
Abfahren (S50) der Bearbeitungsbahn auf Basis dieser wenigstens einen neuen Soll-Position; und
Bearbeiten dieses Bauteils (1) mit dem robotergeführten Werkzeug.

2. Verfahren nach Anspruch 1, **dadurch gekennzeichnet, dass** wenigstens eine der Positionen eine Richtung (R) umfasst.

3. Verfahren nach einem der vorhergehenden Ansprüche, **dadurch gekennzeichnet, dass** Koordinaten der zu ermittelnden Ist-Positionen auswählbar sind.

4. Verfahren nach einem der vorhergehenden Ansprüche, **dadurch gekennzeichnet, dass** wenigstens eine der Ist-Positionen mittels, insbesondere lasergestützter, Triangulation ermittelt wird.

5. Verfahren nach einem der vorhergehenden Ansprüche, **dadurch gekennzeichnet, dass** wenigstens eine der Ist-Positionen automatisiert, insbesondere mittels eines Roboters, ermittelt wird.

6. Verfahren nach einem der vorhergehenden Ansprüche, **dadurch gekennzeichnet, dass** für mehrere Bauteile jeweils, insbesondere wenigstens teilweise automatisiert, je eine Ist-Position für ausgewählte zu korrigierende Punkte ermittelt und die Bearbeitungsbahn jeweils auf Basis der bauteilspezifisch ermittelten Ist-Positionen abgefahren wird.

7. System mit einem Roboter (2), einer Robotersteuerung (3) und einem robotergeführten Werkzeug zum Bearbeiten wenigstens eines Bauteils (1), wobei das System zur Durchführung eines Verfahrens nach einem der vorhergehenden Ansprüche eingerichtet ist.

8. Computerprogrammprodukt mit einem Programmcode, der auf einem von einem Computer lesbaren Medium gespeichert ist, zur Durchführung eines Verfahrens nach einem der vorhergehenden Ansprüche 1-6.

## Claims

1. A method of processing at least one component (1) using a robot-guided (2) tool, wherein the method comprises the steps of:
specifying (S10) a target position for each of a plurality of points (***x***_{s,1} - ***x***_{s,8}) on a processing path;
selecting (S20) points to be corrected (***x***_{s,1} *, **x***_{s,3} *, **x***_{s,5} *, **x***_{s,7} ) from the specified points ( ***x***_{s,1} *- **x***_{s,8} ),
wherein points which are to be corrected are selected in a processing program by selecting from a list or by including in a list or by marking or by instructions which are able to be input, for determining actual positions of specified points of the processing path, or with the aid of an input facility for inputting points to be corrected, and wherein, by default, every second, third or nth point of the specified points is preselected;
determining (S30), for each of the selected points ( ***x***₁ *, **x***₃ *, **x***₅ *, **x***₇ ) and in a manner supported by a sensor, a component-specific actual position on the component (1) to be processed;
replacing (S40) the target position for at least one of the selected points on the basis of the actual position which has been determined for that point;
traversing (S50) the processing path on the basis of this at least one new target position; and
processing this component (1) with the robot-guided tool.

2. The method as claimed in claim 1, **characterised in that** at least one of the positions comprises a direction (R).

3. The method as claimed in any one of the preceding claims, **characterised in that** coordinates of the actual positions to be determined are able to be selected.

4. The method as claimed in any one of the preceding claims, **characterised in that** at least one of the actual positions is determined by means of triangulation, in particular triangulation which is assisted by laser.

5. The method as claimed in any one of the preceding claims, **characterised in that** at least one of the actual positions is determined in an automatic manner, in particular by means of a robot.

6. The method as claimed in any one of the preceding claims, **characterised in that**, for several components, in each case, an actual position is determined, in particular in an at least partially automatic manner, for selected points to be corrected, and, in each case, the processing path is traversed on the basis of the actual positions which have been determined specifically for the respective component.

7. A system comprising a robot (2), a robot control system (3) and a robot-guided tool for processing at least one component (1), wherein the system is set up for carrying out a method as claimed in any one of the preceding claims.

8. A computer program product comprising a program code which is stored on a computer readable medium for carrying out a method as claimed in any one of the preceding claims 1-6.

## Revendications

1. Procédé d'usinage d'au moins un composant (1) avec un outil guidé par un robot (2), avec les étapes :
de spécification (S10) respectivement d'une position théorique pour plusieurs points (X_{s,1} - X_{s,8}) d'une trajectoire d'usinage ;
de sélection (S20) de points (X_{s,1}, X_{s,3}, X_{s,5}, X_{s,7}) à corriger parmi les points spécifiés (X_{s,1} - X_{s,8}),
dans lequel des points à corriger sont sélectionnés dans un programme d'usinage par la sélection parmi une liste ou par enregistrement dans une liste ou par marquage ou des instructions pouvant être entrées pour déterminer des positions réelles de points spécifiés de la trajectoire d'usinage ou à l'aide d'une possibilité d'entrée pour entrer des points à corriger, et dans lequel chaque deuxième point, chaque troisième point ou chaque n^{ième} point des points spécifiés est par défaut présélectionné ;
de détermination assistée par un capteur (S30) sur le composant (1) à usiner de respectivement une position réelle spécifique au composant pour les points sélectionnés (X₁, X₃, X₅, X₇) ;
de remplacement (S40) de la position théorique pour au moins un des points sélectionnés sur la base de la position réelle déterminée pour ledit point ;
de démarrage (S50) de la trajectoire d'usinage sur la base de ladite au moins une position théorique nouvelle ; et
d'usinage dudit composant (1) avec l'outil guidé par un robot.

2. Procédé selon la revendication 1, **caractérisé en ce qu'**au moins une des positions comprend une direction (R).

3. Procédé selon l'une quelconque des revendications précédentes, **caractérisé en ce que** des coordonnées des positions réelles à déterminer peuvent être sélectionnées.

4. Procédé selon l'une quelconque des revendications précédentes, **caractérisé en ce qu'**au moins une des positions réelles est déterminée au moyen d'une triangulation en particulier assistée par laser.

5. Procédé selon l'une quelconque des revendications précédentes, **caractérisé en ce qu'**au moins une des positions réelles est déterminée de manière automatisée, en particulier au moyen d'un robot.

6. Procédé selon l'une quelconque des revendications précédentes, **caractérisé en ce que** pour plusieurs composants respectivement, une automatisation en particulier au moins partielle est effectuée, une position réelle est déterminée respectivement pour des points à corriger sélectionnés et la trajectoire d'usinage est démarrée respectivement sur la base des positions réelles déterminées de manière spécifique au composant.

7. Système avec un robot (2), une commande de robot (3) et un outil guidé par un robot pour usiner au moins un composant (1), dans lequel le système est mis au point pour mettre en oeuvre un procédé selon l'une quelconque des revendications précédentes.

8. Produit-programme d'ordinateur avec un code de programme, qui est mémorisé sur un support lisible par un ordinateur, pour la mise en oeuvre d'un procédé selon l'une quelconque des revendications précédentes 1 - 6.
